# EUROPÄISCHE PATENTSCHRIFT

(11) **EP 3 045 675 B1**
(45) Veröffentlichungstag und Bekanntmachung des Hinweises auf die Patenterteilung: **13.09.2017**
(21) Anmeldenummer: 15151287.8
(22) Anmeldetag: 15.01.2015
(51) Int. Cl.: F01D 17/04, F01D 17/06, F01D 17/14, F02C 9/16

(54) **System und Verfahren zum Regeln eines Turbineneinlassventils**
System and method for controlling a turbine inlet valve
Système et procédé de réglage d'une soupape d'admission de turbine

(43) Veröffentlichungstag der Anmeldung: 20.07.2016
(73) Patentinhaber: Siemens Aktiengesellschaft, 80333 München (DE)
(72) Erfinder: Bennauer, Martin, 46242 Bottrop (DE); Müller, Patrick, 91058 Erlangen (DE); Schindler, Christoph, 45219 Essen (DE); Schmidt, Andreas, 90579 Langenzenn (DE); Schütz, Michael, 91356 Kirchehrenbach (DE); Winkel, Michael, 46284 Dorsten (DE)

(56) Entgegenhaltungen:
- DE-A1- 10 055 166
- DE-A1- 19 819 973
- DE-A1-102007 045 167

## Beschreibung

Die Erfindung betrifft ein System und ein Verfahren zum Regeln eines Öffnungsquerschnitts von wenigstens einem Turbineneinlassventil, über das einer Turbine, insbesondere einer Dampfturbine, ein Arbeitsfluid zuführbar ist.

Mit einem Dampfturbinenregler kann entsprechend dem Betriebszustand der Dampfturbine die Drehzahl der Dampfturbine, die Leistung der Dampfturbine oder der Druck innerhalb der Dampfturbine eingeregelt werden. Hierdurch soll eine möglichst hohe Verfügbarkeit der Dampfturbine sichergestellt werden.

Beim Anfahren der Dampfturbine wird üblicherweise die Drehzahl der Dampfturbine geregelt gesteigert. Beim anschließenden Netzbetrieb schaltet der Dampfturbinenregler in eine Leistungsregelung um, bevor der Dampfturbinenregler bei Bedarf die Druckregelung des Dampferzeugers unterstützt. Stellgröße ist der Hub bzw. der Öffnungsquerschnitt von Turbineneinlassventilen, über die der Dampfturbine ein Arbeitsfluid, insbesondere Dampf, zuführbar ist.

Im Lastbetrieb der Dampfturbine entspricht die Drehzahl der Dampfturbine üblicherweise der Netzfrequenz. Die Regelaufgabe besteht dann darin, die geforderte elektrische Leistung bereit zu stellen oder den Druck des Dampferzeugers zu halten. Eine Inbetriebsetzung der Dampfturbine und mögliche Messgeberausfälle erfordern eine Regelmöglichkeit, die unabhängig von Leistungsmessungen ist und direkt die Stellung der Turbineneinlassventile beeinflusst.

Herkömmliche Regler-Strukturen von Dampfturbinenreglern stellen entweder eine Drehzahl- und Leistungsreglung oder eine Drehzahl- und Öffnungsreglung zur Verfügung. Bei der Drehzahl- und Leistungsreglung ist es bisher nicht möglich, bei einem Ausfall der Leistungsmessung oder zu Inbetriebsetzungszwecken eine definierte Ventilöffnung der Turbineneinlassventile anzufahren. Umgekehrt ist es bei der herkömmlichen Drehzahl- und Öffnungsreglung nicht möglich, die Dampfturbine leistungsgeregelt zu betreiben. Es existieren Regler-Strukturen mit Umschaltern, bei denen zur Realisierung verschiedener Funktionen zwischen verschiedenen Reglern umgeschaltet wird.

Das Dokument DE 198 19 973 A1 offenbart eine Reglerschaltung zur Bildung eines Turbinenregelventile-Stellsignals in einem Dampfkraftwerkblock mittels eines Turbinen-Drehzahlreglers und eines Leistungsreglers.

In der DE 10 2007 045 167 A1 wird eine Regelung für eine Dampfturbine zur Ansteuerung eines Stellorgans offenbart, wobei die Regelung eine Einzelregler-Anordnung mit wenigstens zwei Einzelreglern umfasst.

Aufgabe der Erfindung ist es, Umschaltvorgänge zwischen verschiedenen Betriebszuständen einer Turbine dahingehend zu verbessern, dass schlagartige Bewegungen von zum Versorgen der Turbine mit einem Arbeitsfluid vorgesehenen Turbineneinlassventilen während der Umschaltvorgänge vermieden werden.

Das erfindungsgemäße System zum Regeln eines Öffnungsquerschnitts von wenigstens einem Turbineneinlassventil, über das einer Turbine, insbesondere einer Dampfturbine, ein Arbeitsfluid zuführbar ist, umfasst wenigstens eine Einrichtung zum Erfassen einer Ist-Drehzahl der Turbine, wenigstens eine Einrichtung zum Erfassen einer Ist-Leitung der Turbine, wenigstens eine Einrichtung zum Erfassen eines Ist-Öffnungsquerschnitts des Turbineneinlassventils und wenigstens eine signaltechnisch mit den Einrichtungen verbindbare Regeleinrichtung, die eingerichtet ist, eine Regeldifferenz zwischen einer vorgegebenen Soll-Drehzahl der Turbine und der erfassten Ist-Drehzahl der Turbine, eine Regeldifferenz zwischen einer vorgegebenen Soll-Leistung der Turbine und der erfass ten Ist-Leistung der Turbine und eine Regeldifferenz zwischen einem vorgegebenen Soll-Öffnungsquerschnitt des Turbineneinlassventils und dem erfassten Ist-Öffnungsquerschnitt des Turbineneinlassventils zu ermitteln und den einzelnen Regeldifferenzen zugeordnete Differenzsignale zu erzeugen, wobei die Regeleinrichtung wenigstens einen zum Regeln des Öffnungsquerschnitts des Turbineneinlassventils eingerichteten PI-Regler aufweist und derart ausgebildet ist, dass wahlweise entweder allein das der Regeldifferenz zwischen der vorgegebenen Soll-Drehzahl der Turbine und der erfassten Ist-Dreh zahl der Turbine zugeordnete Differenzsignal oder einerseits das der Regeldifferenz zwischen der vorgegebenen Soll-Drehzahl der Turbine und der erfassten Ist-Drehzahl der Turbine zugeordnete Differenzsignal und andererseits wahlweise entweder das der Regeldifferenz zwischen der vorgegebenen Soll-Leistung der Turbine und der erfassten Ist-Leistung der Turbine zugeordnete Differenzsignal oder das der Regeldifferenz zwischen dem vorgegebenen Soll-Öffnungsquerschnitt des Turbineneinlassventils und dem erfassten Ist-Öffnungsquerschnitt des Turbineneinlassventils zugeordnete Differenzsignal dem PI-Regler als Eingangssignal zuführbar ist bzw. als Eingangssignale zuführbar sind.

Erfindungsgemäß können die verschiedenen Regeldifferenzen bzw. deren zugeordnete Differenzsignale wahlweise einem einzigen PI-Regler als Eingangssignale zugeführt werden. Hierdurch bleibt der integrale Anteil der Stellgröße bestehen und es kommt zu keinem Sprung der von dem PI-Regler erzeugten Stellgröße. Dies macht eine stoßfreie Umschaltung zwischen einzelnen Betriebszuständen der Turbine möglich, wodurch schlagartige Bewegungen des wenigstens einen zum Versorgen der Turbine mit dem Arbeitsfluid vorgesehenen Turbineneinlassventils während der Umschaltvorgänge vermieden werden. Hierdurch werden Umschaltvorgänge zwischen verschiedenen Betriebszuständen einer Turbine gegenüber herkömmlich realisierbaren Umschaltvorgängen verbessert, bei denen zwischen zwei Reglern umgeschaltet werden muss, von denen ein Regler allein der Drehzahl- und Leistungsregelung und der andere Regler allein der Drehzahl- und Öffnungsregelung dient. Dieses herkömmlich erforderliche Umschalten ist zwangsläufig mit schlagartigen Bewegungen der zum Versorgen der Turbine mit dem Arbeitsfluid vorgesehenen Turbineneinlassventile verbunden.

Beim Anfahren der Turbine kann allein die Drehzahlreglung aktiv sein, wobei allein das der Regeldifferenz zwischen der vorgegebenen Soll-Drehzahl der Turbine und der erfassten Ist-Drehzahl der Turbine zugeordnete Differenzsignal dem PI-Regler als Eingangssignal zugeführt wird.

Im Netzbetrieb der Turbine kann die Turbine in drei Lastbetriebsarten betrieben werden. Eine dieser Lastbetriebsarten kann allein durch eine Drehzahlregelung realisiert sein. Hierzu wird dem PI-Regler allein das der Regeldifferenz zwischen der vorgegebenen Soll-Drehzahl der Turbine und der erfassten Ist-Drehzahl der Turbine zugeordnete Differenzsignal als Eingangssignal zugeführt. Eine weitere Lastbetriebsart kann durch eine Drehzahl- und Leistungsregelung realisiert sein. Hierzu werden dem PI-Regler einerseits das der Regeldifferenz zwischen der vorgegebenen Soll-Drehzahl der Turbine und der erfassten Ist-Drehzahl der Turbine zugeordnete Differenzsignal und andererseits das der Regeldifferenz zwischen der vorgegebenen Soll-Leistung der Turbine und der erfassten Ist-Leistung der Turbine zugeordnete Differenzsignal als Eingangssignale zugeführt. Eine dritte Lastbetriebsart kann durch eine Drehzahl- und Öffnungsregelung realisiert sein. Hierzu werden dem PI-Regler einerseits das der Regeldifferenz zwischen der vorgegebenen Soll-Drehzahl der Turbine und der erfassten Ist-Drehzahl der Turbine zugeordnete Differenzsignal und andererseits das der Regeldifferenz zwischen dem vorgegebenen Soll-Öffnungsquerschnitt des Turbineneinlassventils und dem erfassten Ist-Öffnungsquerschnitt des Turbineneinlassventils zugeordnete Differenzsignal als Eingangssignale zugeführt.

Über eine Lastbetriebsartvorwahl kann gesteuert werden, welche Regeldifferenz bzw. welche Regeldifferenzen dem PI-Regler zur Verfügung gestellt wird bzw. werden, um den Öffnungsquerschnitt des Turbineneinlassventils zu regeln.

Soll eine elektrische Leistung eingeregelt werden, kann die Drehzahl- und Leistungsregelung aktiv sein. In Störfällen oder bei instabilen Netzen kann die Turbine auch im Lastbetrieb allein mit einer Drehzahlreglung betrieben werden, um die Netzfrequenz zu stützen. In speziellen Betriebsfällen kann die Turbine in der Drehzahl- und Öffnungsreglung betrieben werden, um beispielsweise einen Ausfall der Leistungsmessung zu umgehen oder um mit einer definierten Öffnung des Turbineneinlassventils zu fahren.

Gemäß der Erfindung werden somit drei verschiedene Regelgrößen, nämlich die drei verschiedenen Regeldifferenzen bzw. deren zugeordnete Differenzsignale, über einen einzigen PI-Regler geregelt. Dabei wird nicht, wie herkömmlich, zwischen verschiedenen Reglern umgeschaltet, sondern zwischen den Regeldifferenzen von Drehzahl der Turbine, Leistung der Turbine und Öffnungsquerschnitt des Turbineneinlassventils umgeschaltet.

Die erfindungsgemäße Kombination von Drehzahl-, Leistungs- und Öffnungsregler in einem einzigen PI-Regler erhöht die Verfügbarkeit und die Flexibilität der Turbine. Mit dem erfindungsgemäßen System können Turbinen, die bisher allein mit einem Drehzahl- und Öffnungsregler ausgestattet wurden, leistungsgeregelt betrieben zu werden. Des Weiteren können Turbinen, die bisher allein mit einem Drehzahl- und Leistungsregler ausgestattet wurden, auch bei einem Messgeberausfall betrieben und gestartet werden, wobei die Turbine mit der Drehzahl- und Öffnungsreglung gefahren wird. Mit dem erfindungsgemäßen System können zudem Netzstörungen besser ausgeregelt werden.

Mit dem erfindungsgemäßen System können auch die Öffnungsquerschnitte von zwei oder mehreren entsprechenden Turbineneinlassventilen geregelt werden. Die Turbine ist vorzugsweise als Dampfturbine ausgebildet.

Die Einrichtung zum Erfassen des Ist-Öffnungsquerschnitts des Turbineneinlassventils kann zum Messen des Ist-Öffnungsquerschnitts des Turbineneinlassventils eingerichtet sein. Alternativ kann die Einrichtung zum Erfassen des Ist-Öffnungsquerschnitts des Turbineneinlassventils eine Logik umfassen, mit welcher der Ist-Öffnungsquerschnitts des Turbineneinlassventils berechnet und hierdurch erfasst werden kann. Beispielsweise kann der Ist-Öffnungsquerschnitts des Turbineneinlassventils über die Logik leittechnisch aus dem Ausgangssignal der Regeleinrichtung hergeleitet werden.

Die Regeleinrichtung ist bevorzugt eingerichtet, ein von dem PI-Regler erzeugtes Stellsignal wahlweise entweder allein mit dem der Regeldifferenz zwischen der vorgegebenen Soll-Drehzahl der Turbine und der erfassten Ist-Drehzahl der Turbine zugeordneten Differenzsignal oder einerseits mit dem der Regeldifferenz zwischen der vorgegebenen Soll-Drehzahl der Turbine und der erfassten Ist-Drehzahl der Turbine zugeordneten Differenzsignal und andererseits wahlweise entweder mit einem der vorgegebenen Soll-Leistung der Turbine zugeordneten Leistungssollsignal oder mit einem dem vorgegebenen Soll-Öffnungsquerschnitt des Turbineneinlassventils zugeordneten Öffnungssollsignal zu verknüpfen. Mit welchem bzw. welchen Differenzsignalen das Stellsignal verknüpft wird, hängt von der jeweiligen Betriebsart der Turbine ab. Durch diese Ausgestaltung ist eine Sollwertaufschaltung realisiert, die eine schnellere Regelung ermöglicht.

Bevorzugt weist die Regeleinrichtung wenigstens einen P-Regler auf, mit dem das dem PI-Regler zuführbare, der Regeldifferenz zwischen der vorgegebenen Soll-Drehzahl der Turbine und der erfassten Ist-Drehzahl der Turbine zugeordnete Differenzsignal verstärkbar ist. Hierdurch kann die Verstärkung des der Regeldifferenz zwischen der vorgegebenen Soll-Drehzahl der Turbine und der erfassten Ist-Drehzahl der Turbine zugeordneten Differenzsignals von der Verstärkung der übrigen Differenzsignale in dem PI-Regler entkoppelt und individualisiert werden.

Die Regeleinrichtung weist bevorzugt wenigstens zwei weitere P-Regler auf, wobei mit einem der beiden P-Regler das dem Stellsignal zuführbare, der Regeldifferenz zwischen der vorgegebenen Soll-Drehzahl der Turbine und der erfassten Ist-Drehzahl der Turbine zugeordnete Differenzsignal verstärkbar ist, und wobei mit dem anderen der beiden P-Regler das dem Stellsignal zuführbare, der Soll-Leistung der Turbine bzw. dem Soll-Öffnungsquerschnitt des Turbineneinlassventils zugeordnete Leistungssollsignal bzw. Öffnungssollsignal verstärkbar ist.

Das System umfasst bevorzugt wenigstens eine signaltechnisch mit der Regeleinrichtung verbindbare Auswahleinrichtung, mit der auswählbar ist, welches Differenzsignal bzw. welche Differenzsignale dem PI-Regler als Eingangssignal zuführbar ist bzw. als Eingangssignale zuführbar sind. Über die Auswahleinrichtung kann eine automatische oder manuelle Auswahl des dem PI-Regler zuführbaren Differenzsignals bzw. der dem PI-Regler zuführbaren Differenzsignale in Abhängigkeit der jeweilig angestrebten Betriebsart der Turbine erfolgen.

Nach dem erfindungsgemäßen Verfahren zum Regeln eines Öffnungsquerschnitts von wenigstens einem Turbineneinlassventil, über das einer Turbine, insbesondere einer Dampfturbine, ein Arbeitsfluid zuführbar ist, werden eine Ist-Drehzahl der Turbine, eine Ist-Leistung der Turbine und ein Ist-Öffnungsquerschnitt des Turbineneinlassventils erfasst, wobei eine Regeldifferenz zwischen einer vorgegebenen Soll-Drehzahl der Turbine und der erfassten Ist-Drehzahl der Turbine, eine Regeldifferenz zwischen einer vorgegebenen Soll-Leistung der Turbine und der erfassten Ist-Leistung der Turbine und eine Regeldifferenz zwischen einem vorgegebenen Soll-Öffnungsquerschnitt des Turbineneinlassventils und dem erfassten Ist-Öffnungsquerschnitt des Turbineneinlassventils ermittelt und den einzelnen Regeldifferenzen zugeordnete Differenzsignale erzeugt werden, wobei wahlweise entweder allein das der Regeldifferenz zwischen der vorgegebenen Soll-Drehzahl der Turbine und der erfassten Ist-Drehzahl der Turbine zugeordnete Differenzsignal oder einerseits das der Regeldifferenz zwischen der vorgegebenen Soll-Drehzahl der Turbine und der erfassten Ist-Drehzahl der Turbine zugeordnete Differenzsignal und andererseits wahlweise entweder das der Regeldifferenz zwischen der vorgegebenen Soll-Leistung der Turbine und der erfassten Ist-Leistung der Turbine zugeordnete Differenzsignal oder das der Regeldifferenz zwischen dem vorgegebenen Soll-Öffnungsquerschnitt des Turbineneinlassventils und dem erfassten Ist-Öffnungsquerschnitt des Turbineneinlassventils zugeordnete Differenzsignal einem zum Regeln des Öffnungsquerschnitts des Turbineneinlassventils eingerichteten PI-Regler als Eingangssignal zugeführt wird bzw. als Eingangssignale zugeführt werden.

Mit dem Verfahren sind die oben mit Bezug auf das System genannten Vorteile entsprechend verbunden. Insbesondere kann das System zur Durchführung des Verfahrens eingerichtet sein. Der Ist-Öffnungsquerschnitt des Turbineneinlassventils kann, wie oben im Zusammenhang mit dem System beschrieben, unmittelbar durch Messung oder mittelbar durch einer Auswertung eines Ausgangssignals einer Regeleinrichtung eines entsprechenden Systems erfasst werden.

Bevorzugt wird ein von dem PI-Regler erzeugtes Stellsignal wahlweise entweder allein mit dem der Regeldifferenz zwischen der vorgegebenen Soll-Drehzahl der Turbine und der erfassten Ist-Drehzahl der Turbine zugeordneten Differenzsignal oder einerseits mit dem der Regeldifferenz zwischen der vorgegebenen Soll-Drehzahl der Turbine und der erfassten Ist-Drehzahl der Turbine zugeordneten Differenzsignal und andererseits wahlweise entweder mit einem der vorgegebenen Soll-Leistung der Turbine zugeordneten Leistungssollsignal oder mit einem dem vorgegebenen Soll-Öffnungsquerschnitt des Turbineneinlassventils zugeordneten Öffnungssollsignal verknüpft. Mit dieser Ausgestaltung sind die oben mit Bezug auf die entsprechende Ausgestaltung des Systems genannten Vorteile entsprechend verbunden.

Das dem PI-Regler zuführbare, der Regeldifferenz zwischen der vorgegebenen Soll-Drehzahl der Turbine und der erfassten Ist-Drehzahl der Turbine zugeordnete Differenzsignal wird bevorzugt mittels eines P-Reglers verstärkt. Mit dieser Ausgestaltung sind die oben mit Bezug auf die entsprechende Ausgestaltung des Systems genannten Vorteile entsprechend verbunden.

Bevorzugt wird das dem Stellsignal zuführbare, der Regeldifferenz zwischen der vorgegebenen Soll-Drehzahl der Turbine und der erfassten Ist-Drehzahl der Turbine zugeordnete Differenzsignal mittels eines weiteren P-Reglers verstärkt und das dem Stellsignal zuführbare, der Soll-Leistung der Turbine bzw. dem Soll-Öffnungsquerschnitt des Turbineneinlassventils zugeordnete Leistungssollsignal bzw. Öffnungssollsignal mittels eines weiteren P-Reglers verstärkt. Mit dieser Ausgestaltung sind die oben mit Bezug auf die entsprechende Ausgestaltung des Systems genannten Vorteile entsprechend verbunden.

Im Folgenden wird die Erfindung unter Bezugnahme auf die anliegenden Figuren anhand bevorzugter Ausführungsformen beispielhaft erläutert, wobei die nachfolgend dargestellten Merkmale sowohl jeweils für sich genommen als auch in unterschiedlicher Kombination miteinander einen Aspekt der Erfindung darstellen können. Es zeigen:
- Fig. 1: eine schematische Darstellung eines Ausführungsbeispiels für ein erfindungsgemäßes System; und
- Fig. 2: eine schematische Darstellung eines weiteren Ausführungsbeispiels für ein erfindungsgemäßes System.

In den Figuren sind funktional gleiche Bauteile mit denselben Bezugszeichen versehen.

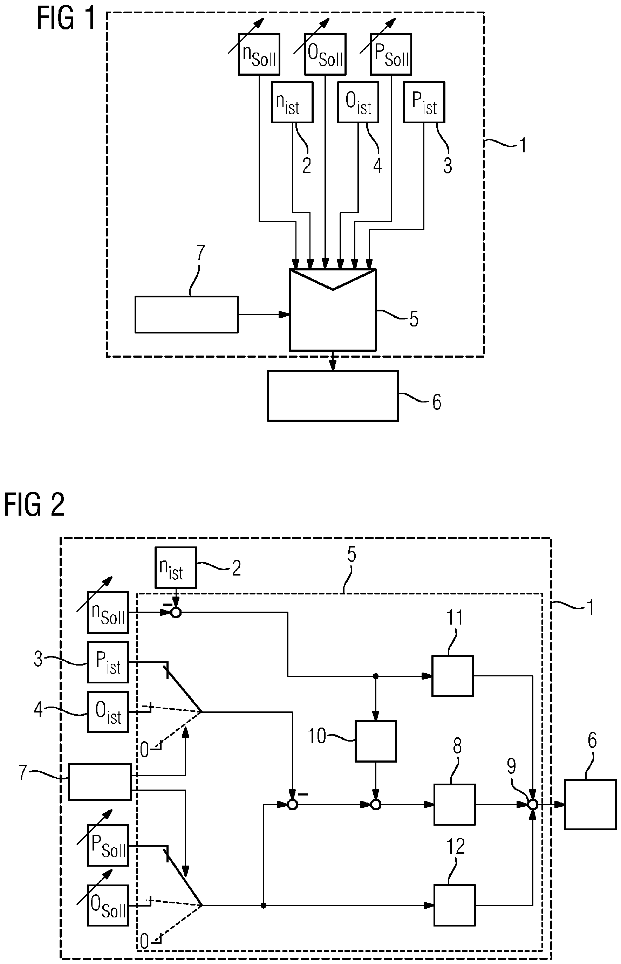

Figur 1 zeigt eine schematische Darstellung eines Ausführungsbeispiels für ein erfindungsgemäßes System 1 zum Regeln eines Öffnungsquerschnitts von wenigstens einem nicht gezeigten Turbineneinlassventil, über das einer nicht gezeigten Turbine, insbesondere einer Dampfturbine, ein Arbeitsfluid zuführbar ist.

Das System 1 umfasst eine Einrichtung 2 zum Erfassen einer Ist-Drehzahl n_{Ist} der Turbine, eine Einrichtung 3 zum Erfassen einer Ist-Leitung P_{Ist} der Turbine, eine Einrichtung 4 zum Erfassen eines Ist-Öffnungsquerschnitts O_{Ist} des Turbineneinlassventils und eine signaltechnisch mit den Einrichtungen 2, 3 und 4 verbindbare Regeleinrichtung 5. Die Regeleinrichtung 5 ist eingerichtet, eine Regeldifferenz nₛₒₗₗ-n_{Ist} zwischen einer vorgegebenen Soll-Drehzahl nₛₒₗₗ der Turbine und der erfassten Ist-Drehzahl n_{Ist} der Turbine, eine Regeldifferenz P_{Soll}-P_{Ist} zwischen einer vorgegebenen Soll-Leistung P_{Soll} der Turbine und der erfassten Ist-Leistung P_{Ist} der Turbine und eine Regeldifferenz O_{Soll}-O_{Ist} zwischen einem vorgegebenen Soll-Öffnungsquerschnitt O_{Soll} des Turbineneinlassventils und dem erfassten Ist-Öffnungsquerschnitt O_{Ist} des Turbineneinlassventils zu ermitteln und den einzelnen Regeldifferenzen n_{Soll}-n_{Ist}, P_{Soll}-P_{Ist} und O_{Soll}-O_{Ist} zugeordnete Differenzsignale zu erzeugen. Die Regeleinrichtung 5 ist signaltechnisch mit einer Ventilansteuerung 6 zum Einstellen des Öffnungsquerschnitts des Turbineneinlassventils verbunden. Die vorgegebene Soll-Drehzahl n_{Soll}, die vorgegebene Soll-Leistung P_{Soll} und der vorgegebene Soll-Öffnungsquerschnitt O_{Soll} sind einstellbar, was durch die schräg verlaufenden Pfeile angedeutet sein soll.

Die Regeleinrichtung 5 umfasst einen zum Regeln des Öffnungsquerschnitts des Turbineneinlassventils eingerichteten, nicht gezeigten PI-Regler und ist derart ausgebildet, dass wahlweise entweder allein das der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal oder einerseits das der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal und andererseits wahlweise entweder das der Regeldifferenz P_{Soll}-P_{Ist} zwischen der vorgegebenen Soll-Leistung P_{Soll} der Turbine und der erfassten Ist-Leistung P_{Ist} der Turbine zugeordnete Differenzsignal oder das der Regeldifferenz Oₛₒₗₗ-O_{Ist} zwischen dem vorgegebenen Soll-Öffnungsquerschnitt O_{Soll} des Turbineneinlassventils und dem erfassten Ist-Öffnungsquerschnitt O_{Ist} des Turbineneinlassventils zugeordnete Differenzsignal dem PI-Regler als Eingangssignal zuführbar ist bzw. als Eingangssignale zuführbar sind.

Die Regeleinrichtung 5 ist des Weiteren eingerichtet, ein von dem PI-Regler erzeugtes Stellsignal wahlweise entweder allein mit dem der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordneten Differenzsignal oder einerseits mit dem der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordneten Differenzsignal und andererseits wahlweise entweder mit einem der vorgegebenen Soll-Leistung P_{Soll} der Turbine zugeordneten Leistungssollsignal oder mit einem dem vorgegebenen Soll-Öffnungsquerschnitt O_{Soll} des Turbineneinlassventils zugeordneten Öffnungssollsignal zu verknüpfen.

Die Regeleinrichtung 5 weist einen nicht gezeigten P-Regler auf, mit dem das dem PI-Regler zuführbare, der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal verstärkbar ist.

Zudem umfasst die Regeleinrichtung 5 zwei weitere nicht gezeigte P-Regler, wobei mit einem der beiden P-Regler das dem Stellsignal zuführbare, der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal verstärkbar ist, und wobei mit dem anderen der beiden P-Regler das dem Stellsignal zuführbare, der Soll-Leistung P_{Soll} der Turbine bzw. dem Soll-Öffnungsquerschnitt O_{Soll} des Turbineneinlassventils zugeordnete Leistungssollsignal bzw. Öffnungssollsignal verstärkbar ist.

Das System 1 umfasst eine signaltechnisch mit der Regeleinrichtung 5 verbindbare Auswahleinrichtung 7, mit der auswählbar ist, welches Differenzsignal bzw. welche Differenzsignale dem PI-Regler als Eingangssignal zuführbar ist bzw. als Eingangssignale zuführbar sind.

Figur 2 zeigt eine schematische Darstellung eines weiteren Ausführungsbeispiels für ein erfindungsgemäßes System 1 zum Regeln eines Öffnungsquerschnitts von wenigstens einem nicht gezeigten Turbineneinlassventil, über das einer nicht gezeigten Turbine, insbesondere einer Dampfturbine, ein Arbeitsfluid zuführbar ist.

Das System 1 umfasst eine Einrichtung 2 zum Erfassen einer Ist-Drehzahl n_{Ist} der Turbine, eine Einrichtung 3 zum Erfassen einer Ist-Leitung P_{Ist} der Turbine, eine Einrichtung 4 zum Erfassen eines Ist-Öffnungsquerschnitts O_{Ist} des Turbineneinlassventils und eine signaltechnisch mit den Einrichtungen 2, 3 und 4 verbindbare Regeleinrichtung 5. Die Regeleinrichtung 5 ist eingerichtet, eine Regeldifferenz n_{Soll}-n_{Ist} zwischen einer vorgegebenen Soll-Drehzahl n_{Soll} der Turbine und der erfassten Ist-Drehzahl n_{Ist} der Turbine, eine Regeldifferenz P_{Soll}-P_{Ist} zwischen einer vorgegebenen Soll-Leistung P_{Soll} der Turbine und der erfassten Ist-Leistung P_{Ist} der Turbine und eine Regeldifferenz O_{Soll}-O_{Ist} zwischen einem vorgegebenen Soll-Öffnungsquerschnitt O_{Soll} des Turbineneinlassventils und dem erfassten Ist-Öffnungsquerschnitt O_{Ist} des Turbineneinlassventils zu ermitteln und den einzelnen Regeldifferenzen n_{Soll}-n_{Ist}, P_{Soll}-P_{Ist} und O_{Soll}-O_{Ist} zugeordnete Differenzsignale zu erzeugen. Die Regeleinrichtung 5 ist signaltechnisch mit einer Ventilansteuerung 6 zum Einstellen des Öffnungsquerschnitts des Turbineneinlassventils verbunden. Die vorgegebene Soll-Drehzahl n_{Soll}, die vorgegebene Soll-Leistung P_{Soll} und der vorgegebene Soll-Öffnungsquerschnitt O_{Soll} sind einstellbar, was durch die schräg verlaufenden Pfeile angedeutet sein soll.

Die Regeleinrichtung 5 umfasst einen zum Regeln des Öffnungsquerschnitts des Turbineneinlassventils eingerichteten PI-Regler 8 und ist derart ausgebildet, dass wahlweise entweder allein das der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal oder einerseits das der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal und andererseits wahlweise entweder das der Regeldifferenz P_{Soll}-P_{Ist} zwischen der vorgegebenen Soll-Leistung P_{Soll} der Turbine und der erfassten Ist-Leistung P_{Ist} der Turbine zugeordnete Differenzsignal oder das der Regeldifferenz O_{Soll}-O_{Ist} zwischen dem vorgegebenen Soll-Öffnungsquerschnitt Oₛₒₗₗ des Turbineneinlassventils und dem erfassten Ist-Öffnungsquerschnitt O_{Ist} des Turbineneinlassventils zugeordnete Differenzsignal dem PI-Regler 8 als Eingangssignal zuführbar ist bzw. als Eingangssignale zuführbar sind.

Die Regeleinrichtung 5 ist des Weiteren eingerichtet, ein von dem PI-Regler 8 erzeugtes Stellsignal wahlweise entweder allein mit dem der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordneten Differenzsignal oder einerseits mit dem der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordneten Differenzsignal und andererseits wahlweise entweder mit einem der vorgegebenen Soll-Leistung P_{Soll} der Turbine zugeordneten Leistungssollsignal oder mit einem dem vorgegebenen Soll-Öffnungsquerschnitt O_{Soll} des Turbineneinlassventils zugeordneten Öffnungssollsignal an der Verknüpfung 9 zu verknüpfen.

Die Regeleinrichtung 5 weist einen P-Regler 10 auf, mit dem das dem PI-Regler 8 zuführbare, der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal verstärkbar ist.

Zudem umfasst die Regeleinrichtung 5 zwei weitere P-Regler 11 und 12, wobei mit dem P-Regler 11 das dem Stellsignal zuführbare, der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal verstärkbar ist, und wobei mit dem P-Regler 12 das dem Stellsignal zuführbare, der Soll-Leistung P_{Soll} der Turbine bzw. dem Soll-Öffnungsquerschnitt O_{Soll} des Turbineneinlassventils zugeordnete Leistungssollsignal bzw. Öffnungssollsignal verstärkbar ist.

Das System 1 umfasst eine signaltechnisch mit der Regeleinrichtung 5 verbindbare Auswahleinrichtung 7, mit der auswählbar ist, welches Differenzsignal bzw. welche Differenzsignale dem PI-Regler als Eingangssignal zuführbar ist bzw. als Eingangssignale zuführbar sind. In Figur 2 ist über die Auswahleinrichtung 7 eine Drehzahl- und Leistungsregelung ausgewählt. Hierzu werden dem PI-Regler 8 einerseits das der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal und andererseits das der Regeldifferenz P_{Soll}-P_{Ist} zwischen der vorgegebenen Soll-Leistung P_{Soll} der Turbine und der erfassten Ist-Leistung P_{Ist} der Turbine zugeordnete Differenzsignal als Eingangssignale zugeführt. Werden über die Auswahleinrichtung 7 die Null-Stellungen ausgewählt, erfolgt allein eine Drehzahlregelung. Hierzu wird dem PI-Regler 8 allein das der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal als Eingangssignal zugeführt. Wird über die Auswahleinrichtung 7 die zwischen der gezeigten oberen Stellung und der Null-Stellung angeordnete mittlere Stellung ausgewählt, erfolgt eine Drehzahl- und Öffnungsregelung. Hierzu werden dem PI-Regler 8 einerseits das der Regeldifferenz n_{Soll}-n_{Ist} zwischen der vorgegebenen Soll-Drehzahl n_{Soll} der Turbine und der erfassten Ist-Drehzahl n_{Ist} der Turbine zugeordnete Differenzsignal und andererseits das der Regeldifferenz O_{Soll}-O_{Ist} zwischen dem vorgegebenen Soll-Öffnungsquerschnitt O_{Soll} des Turbineneinlassventils und dem erfassten Ist-Öffnungsquerschnitt O_{Ist} des Turbineneinlassventils zugeordnete Differenzsignal als Eingangssignale zugeführt. Obwohl die Erfindung im Detail durch die bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

## Patentansprüche

1. System (1) zum Regeln eines Öffnungsquerschnitts von wenigstens einem Turbineneinlassventil,
über das einer Turbine, insbesondere einer Dampfturbine, ein Arbeitsfluid zuführbar ist,
aufweisend wenigstens eine Einrichtung (2) zum Erfassen einer Ist-Drehzahl (n_{Ist}) der Turbine,
wenigstens eine Einrichtung (3) zum Erfassen einer Ist-Leistung (P_{Ist}) der Turbine,
wenigstens eine Einrichtung (4) zum Erfassen eines Ist-Öffnungsquerschnitts (O_{Ist}) des Turbineneinlassventils und wenigstens eine signaltechnisch mit den Einrichtungen (2, 3, 4) verbindbare Regeleinrichtung (5),
die eingerichtet ist, eine Regeldifferenz (n_{Soll}-n_{Ist}) zwischen einer vorgegebenen Soll-Drehzahl (n_{Soll}) der Turbine und der erfassten Ist-Drehzahl (n_{Ist}) der Turbine, und eine Regeldifferenz (P_{Soll}-P_{Ist}) zwischen einer vorgegebenen Soll-Leistung (P_{Soll}) der Turbine und der erfassten Ist-Leistung (P_{Ist}) der Turbine zu ermitteln und den einzelnen Regeldifferenzen (n_{Soll}-n_{Ist}, Pₛₒₗₗ-Pᵢₛₜ) zugeordnete Differenzsignale zu erzeugen,
**dadurch gekennzeichnet, dass** die Regeleinrichtung (5) eingerichtet ist, eine Regeldifferenz (Oₛₒₗₗ-Oᵢₛₜ) zwischen einem vorgegebenen Soll-Öffnungsquerschnitt (Oₛₒₗₗ) des Turbineneinlassventils und dem erfassten Ist-Öffnungsquerschnitt (Oᵢₛₜ) des Turbineneinlassventils zu ermitteln und dieser Regeldifferenz (Oₛₒₗₗ-Oᵢₛₜ) ein zugeordnetes Differenzsignal zu erzeugen, und dass die Regeleinrichtung (5) wenigstens einen zum Regeln des Öffnungsquerschnitts des Turbineneinlassventils eingerichteten PI-Regler (8) aufweist und derart ausgebildet ist, dass wahlweise entweder allein das der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordnete Differenzsignal oder einerseits das der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordnete Differenzsignal und andererseits wahlweise entweder das der Regeldifferenz (P_{Soll}-P_{Ist}) zwischen der vorgegebenen Soll-Leistung (P_{Soll}) der Turbine und der erfassten Ist-Leistung (P_{Ist}) der Turbine zugeordnete Differenzsignal oder das der Regeldifferenz (O_{Soll}-O_{Ist}) zwischen dem vorgegebenen Soll-Öffnungsquerschnitt (O_{Soll}) des Turbineneinlassventils und dem erfassten Ist-Öffnungsquerschnitt (O_{Ist}) des Turbineneinlassventils zugeordnete Differenzsignal dem PI-Regler (8) als Eingangssignal zuführbar ist bzw. als Eingangssignale zuführbar sind.

2. System (1) gemäß Anspruch 1,
wobei die Regeleinrichtung (5) eingerichtet ist, ein von dem PI-Regler (8) erzeugtes Stellsignal wahlweise entweder allein mit dem der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordneten Differenzsignal oder einerseits mit dem der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordneten Differenzsignal und andererseits wahlweise entweder mit einem der vorgegebenen Soll-Leistung (P_{Soll}) der Turbine zugeordneten Leistungssollsignal oder mit einem dem vorgegebenen Soll-Öffnungsquerschnitt (O_{Soll}) des Turbineneinlassventils zugeordneten Öffnungssollsignal zu verknüpfen.

3. System (1) gemäß Anspruch 1 oder 2,
wobei die Regeleinrichtung (5) wenigstens einen P-Regler (10) aufweist, mit dem das dem PI-Regler (8) zuführbare, der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordnete Differenzsignal verstärkbar ist.

4. System (1) gemäß Anspruch 2 oder 3,
wobei die Regeleinrichtung (5) wenigstens zwei weitere P-Regler (11, 12) aufweist,
wobei mit einem der beiden P-Regler (11) das dem Stellsignal zuführbare, der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordnete Differenzsignal verstärkbar ist, und
wobei mit dem anderen der beiden P-Regler (12) das dem Stellsignal zuführbare, der Soll-Leistung (P_{Soll}) der Turbine bzw. dem Soll-Öffnungsquerschnitt (O_{Soll}) des Turbineneinlassventils zugeordnete Leistungssollsignal bzw. Öffnungssollsignal verstärkbar ist.

5. System (1) gemäß einem der Ansprüche 1 bis 4,
aufweisend wenigstens eine signaltechnisch mit der Regeleinrichtung (5) verbindbare Auswahleinrichtung (7), mit der auswählbar ist, welches Differenzsignal bzw. welche Differenzsignale dem PI-Regler (8) als Eingangssignal zuführbar ist bzw. als Eingangssignale zuführbar sind.

6. Verfahren zum Regeln eines Öffnungsquerschnitts von wenigstens einem Turbineneinlassventil,
über das einer Turbine, insbesondere einer Dampfturbine, ein Arbeitsfluid zuführbar ist,
wobei eine Ist-Drehzahl (n_{Ist}) der Turbine, eine Ist-Leistung (P_{Ist}) der Turbine und ein Ist-Öffnungsquerschnitt (O_{Ist}) des Turbineneinlassventils erfasst werden,
wobei eine Regeldifferenz (n_{Soll}-n_{Ist}) zwischen einer vorgegebenen Soll-Drehzahl (n_{Soll}) der Turbine und der erfassten Ist-Drehzahl (n_{Ist}) der Turbine, und eine Regeldifferenz (P_{Soll}-P_{Ist}) zwischen einer vorgegebenen Soll-Leistung (P_{Soll}) der Turbine und der erfassten Ist-Leistung (P_{Ist}) der Turbine ermittelt und den einzelnen Regeldifferenzen (n_{Soll}-n_{Ist}, Pₛₒₗₗ-Pᵢₛₜ) zugeordnete Differenzsignale erzeugt werden,
**dadurch gekennzeichnet, dass** eine Regeldifferenz (Oₛₒₗₗ-Oᵢₛₜ) zwischen einem vorgegebenen Soll-Öffnungsquerschnitt (Oₛₒₗₗ) des Turbineneinlassventils und dem erfassten Ist-Öffnungsquerschnitt (Oᵢₛₜ) des Turbineneinlassventils ermittelt und dieser Regeldifferenz (Osoll-Oist) ein zugeordnetes Differenzsignal erzeugt wird, und dass
wahlweise entweder allein das der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordnete Differenzsignal oder einerseits das der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordnete Differenzsignal und andererseits wahlweise entweder das der Regeldifferenz (P_{Soll}-P_{Ist}) zwischen der vorgegebenen Soll-Leistung (P_{Soll}) der Turbine und der erfassten Ist-Leistung (P_{Ist}) der Turbine zugeordnete Differenzsignal oder das der Regeldifferenz (O_{Soll}-O_{Ist}) zwischen dem vorgegebenen Soll-Öffnungsquerschnitt (O_{Soll}) des Turbineneinlassventils und dem erfassten Ist-Öffnungsquerschnitt (O_{Ist}) des Turbineneinlassventils zugeordnete Differenzsignal einem zum Regeln des Öffnungsquerschnitts des Turbineneinlassventils eingerichteten PI-Regler (8) als Eingangssignal zugeführt wird bzw. als Eingangssignale zugeführt werden.

7. Verfahren gemäß Anspruch 6,
wobei ein von dem PI-Regler (8) erzeugtes Stellsignal wahlweise entweder allein mit dem der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordneten Differenzsignal oder einerseits mit dem der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordneten Differenzsignal und andererseits wahlweise entweder mit einem der vorgegebenen Soll-Leistung (P_{Soll}) der Turbine zugeordneten Leistungssollsignal oder mit einem dem vorgegebenen Soll-Öffnungsquerschnitt (O_{Soll}) des Turbineneinlassventils zugeordneten Öffnungssollsignal verknüpft wird.

8. Verfahren gemäß Anspruch 6 oder 7,
wobei das dem PI-Regler (8) zuführbare, der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordnete Differenzsignal mittels eines P-Reglers (10) verstärkt wird.

9. Verfahren gemäß Anspruch 7 oder 8,
wobei das dem Stellsignal zuführbare, der Regeldifferenz (n_{Soll}-n_{Ist}) zwischen der vorgegebenen Soll-Drehzahl (n_{Soll}) der Turbine und der erfassten Ist-Drehzahl (n_{Ist}) der Turbine zugeordnete Differenzsignal mittels eines weiteren P-Reglers (11) verstärkt wird, und
wobei das dem Stellsignal zuführbare, der Soll-Leistung (P_{Soll}) der Turbine bzw. dem Soll-Öffnungsquerschnitt (O_{Soll}) des Turbineneinlassventils zugeordnete Leistungssollsignal bzw. Öffnungssollsignal mittels eines weiteren P-Reglers (12) verstärkt wird.

## Claims

1. System (1) for controlling an opening cross section of at least one turbine inlet valve,
via which a working fluid can be fed to a turbine, in particular a steam turbine,
having at least one device (2) for detecting an actual speed (n_{act}) of the turbine,
at least one device (3) for detecting an actual power (Pact) of the turbine,
at least one device (4) for detecting an actual opening cross section (O_{act}) of the turbine inlet valve and
at least one control device (5), which can be connected in signalling terms to the devices (2, 3, 4)
and is designed to determine a control difference (nₛₑₜ-n_{act}) between a prescribed setpoint speed (nₛₑₜ) of the turbine and the detected actual speed (n_{act}) of the turbine,
and a control difference (Pₛₑₜ-P_{act}) between a prescribed setpoint power (Pₛₑₜ) of the turbine and the detected actual power (Pact) of the turbine and to generate difference signals assigned to the individual control differences (nₛₑₜ-n_{act}, Pₛₑₜ-P_{act}),
**characterized in that**
the control device (5) is designed to determine a control difference (Oₛₑₜ-O_{act}) between a prescribed setpoint opening cross section (Oₛₑₜ) of the turbine inlet valve and the detected actual opening cross section (O_{act}) of the turbine inlet valve and to generate a difference signal assigned to this control difference (Oₛₑₜ-O_{act}), and **in that**
the control device (5) has at least one PI controller (8) designed for controlling the opening cross section of the turbine inlet valve and is designed in such a way that optionally either just the difference signal assigned to the control difference (nₛₑₜ-n_{act}) between the prescribed setpoint speed (nₛₑₜ) of the turbine and the detected actual speed (n_{act}) of the turbine or on the one hand the difference signal assigned to the control difference (nₛₑₜ-n_{act}) between the prescribed setpoint speed (nₛₑₜ) of the turbine and the detected actual speed (n_{act}) of the turbine and on the other hand optionally either the difference signal assigned to the control difference (Pₛₑₜ-P_{act}) between the prescribed setpoint power (Pₛₑₜ) of the turbine and the detected actual power (Pact) of the turbine or the difference signal assigned to the control difference (Oₛₑₜ-O_{act}) between the prescribed setpoint opening cross section (Oₛₑₜ) of the turbine inlet valve and the detected actual opening cross section (O_{act}) of the turbine inlet valve can be fed as an input signal or as input signals to the PI controller (8).

2. System (1) according to Claim 1,
wherein the control device (5) is designed to combine an actuating signal generated by the PI controller (8) optionally either just with the difference signal assigned to the control difference (nₛₑₜ-n_{act}) between the prescribed setpoint speed (nₛₑₜ) of the turbine and the detected actual speed (n_{act}) of the turbine or on the one hand with the difference signal assigned to the control difference (nₛₑₜ-n_{act}) between the prescribed setpoint speed (nₛₑₜ) of the turbine and the detected actual speed (n_{act}) of the turbine and on the other hand optionally either with a power setpoint signal assigned to the prescribed setpoint power (Pₛₑₜ) of the turbine or with an opening setpoint signal assigned to the prescribed setpoint opening cross section (Oₛₑₜ) of the turbine inlet valve.

3. System (1) according to Claim 1 or 2,
wherein the control device (5) has at least one P controller (10), with which the difference signal that is assigned to the control difference (nₛₑₜ-n_{act}) between the prescribed setpoint speed (nₛₑₜ) of the turbine and the detected actual speed (n_{act}) of the turbine and can be fed to the PI controller (8) can be amplified.

4. System (1) according to Claim 2 or 3,
wherein the control device (5) has at least two further P controllers (11, 12),
wherein with one of the two P controllers (11) the difference signal that is assigned to the control difference (nₛₑₜ-n_{act}) between the prescribed setpoint speed (nₛₑₜ) of the turbine and the detected actual speed (n_{act}) of the turbine and can be fed to the actuating signal can be amplified, and
wherein with the other of the two P controllers (12) the power setpoint signal or opening setpoint signal that is assigned to the setpoint power (Pₛₑₜ) of the turbine or to the setpoint opening cross section (Oₛₑₜ) of the turbine inlet valve and can be fed to the actuating signal can be amplified.

5. System (1) according to one of Claims 1 to 4,
having at least one selecting device (7), which can be connected in signalling terms to the control device (5) and with which it can be selected which difference signal or which difference signals can be fed as an input signal or as input signals to the PI controller (8).

6. Method for controlling an opening cross section of at least one turbine inlet valve,
via which a working fluid can be fed to a turbine, in particular a steam turbine,
wherein an actual speed (n_{act}) of the turbine, an actual power (Pact) of the turbine and an actual opening cross section (O_{act}) of the turbine inlet valve are detected,
wherein a control difference (nₛₑₜ-n_{act}) between a predetermined setpoint speed (nₛₑₜ) of the turbine and the detected actual speed (n_{act}) of the turbine and a control difference (Pₛₑₜ-P_{act}) between a predetermined setpoint power (Pₛₑₜ) of the turbine and the detected actual power (Pact) of the turbine are determined and difference signals assigned to the individual control differences (nₛₑₜ-n_{act}, Pₛₑₜ-P_{act}) are generated,
**characterized in that**
a control difference (Oₛₑₜ-O_{act}) between a prescribed setpoint opening cross section (Oₛₑₜ) of the turbine inlet valve and the detected actual opening cross section (O_{act}) of the turbine inlet valve is determined and a difference signal assigned to this control difference (Oₛₑₜ-O_{act}) is generated, and **in that** optionally either just the difference signal assigned to the control difference (nₛₑₜ-n_{act}) between the prescribed setpoint speed (nₛₑₜ) of the turbine and the detected actual speed (n_{act}) of the turbine or on the one hand the difference signal assigned to the control difference (nₛₑₜ-n_{act}) between the prescribed setpoint speed (nₛₑₜ) of the turbine and the detected actual speed (n_{act}) of the turbine and on the other hand optionally either the difference signal assigned to the control difference (Pₛₑₜ-P_{act}) between the prescribed setpoint power (Pₛₑₜ) of the turbine and the detected actual power (Pact) of the turbine or the difference signal assigned to the control difference (Oₛₑₜ-O_{act}) between the prescribed setpoint opening cross section (Oₛₑₜ) of the turbine inlet valve and the detected actual opening cross section (O_{act}) of the turbine inlet valve is fed as an input signal or are fed as input signals to a PI controller (8) designed for controlling the opening cross section of the turbine inlet valve.

7. Method according to Claim 6,
wherein an actuating signal generated by the PI controller (8) is combined optionally either just with the difference signal assigned to the control difference (nₛₑₜ-n_{act}) between the prescribed setpoint speed (nₛₑₜ) of the turbine and the detected actual speed (n_{act}) of the turbine or on the one hand with the difference signal assigned to the control difference (nₛₑₜ-n_{act}) between the prescribed setpoint speed (nₛₑₜ) of the turbine and the detected speed (n_{act}) of the turbine and on the other hand optionally either with a power setpoint signal assigned to the prescribed setpoint power (Pₛₑₜ) of the turbine or with an opening setpoint signal assigned to the prescribed setpoint opening cross section (Oₛₑₜ) of the turbine inlet valve.

8. Method according to Claim 6 or 7,
wherein the difference signal that is assigned to the control difference (nₛₑₜ-n_{act}) between the prescribed setpoint speed (nₛₑₜ) of the turbine and the detected actual speed (n_{act}) of the turbine and can be fed to the PI controller (8) is amplified by means of a P controller (10).

9. Method according to Claim 7 or 8,
wherein the difference signal that is assigned to the control difference (nₛₑₜ-n_{act}) between the prescribed setpoint speed (nₛₑₜ) of the turbine and the detected actual speed (n_{act}) of the turbine and can be fed to the actuating signal is amplified by means of a further P controller (11), and
wherein the power setpoint signal or opening setpoint signal that is assigned to the setpoint power (Pₛₑₜ) of the turbine or the setpoint opening cross section (Oₛₑₜ) of the turbine inlet valve and can be fed to the actuating signal is amplified by means of a further P controller (12).

## Revendications

1. Système (1) de réglage d'une section transversale d'ouverture d'au moins une soupape d'admission de turbine,
par laquelle un fluide de travail peut être envoyé à une turbine, notamment à une turbine à vapeur,
comportant au moins un dispositif (2) de détection d'un régime (n_{Ist}) réel de la turbine,
au moins un dispositif (3) de détection d'une puissance (P_{Ist}) réel de la turbine,
au moins un dispositif (4) de détection de la section (O_{Ist}) transversale d'ouverture réelle de la soupape d'admission de la turbine et
au moins un dispositif (5) de réglage pouvant être relié en technique du signal aux dispositifs (2, 3, 4),
qui est conçu pour déterminer une différence (n_{Soll}-n_{Ist}) de réglage entre un régime (n_{Soll}) de consigne donné à l'avance de la turbine et le régime (n_{Ist}) réel détecté de la turbine et une différence (Pₛₒₗₗ-P_{Ist}) de réglage entre une puissance (P_{Soll}) de consigne donnée à l'avance de la turbine et la puissance (P_{Ist}) réelle détectée de la turbine et pour produire des signaux de différence associés aux diverses différences (n_{Soll}-n_{Ist}; P_{Soll}-P_{Ist}) de réglage,
**caractérisé en ce que**
le dispositif (5) de réglage est conçu pour produire une différence (O_{Soll}-O_{Ist}) de réglage entre une section (Oₛₒₗₗ) transversale d'ouverture de consigne donnée à l'avance de la soupape d'admission de la turbine et la section (O_{Ist}) transversale d'ouverture réelle détectée de la soupape d'admission de la turbine et un signal de différence associé à cette différence (O_{Soll}-O_{Ist}) de réglage et **en ce que**
le dispositif (5) de réglage a au moins un régleur (8) PI conçu pour régler la section transversale d'ouverture de la soupape d'admission de la turbine et est constitué de manière à ce que, au choix, soit tout seul le signal de différence associé à la différence (n_{Soll}-n_{Ist}) de réglage entre le régime (n_{Soll}) de consigne donné à l'avance de la turbine et le régime (n_{Ist}) réel détecté de la turbine, soit, d'une part, le signal de différence associé à la différence (n_{Soll}-n_{Ist}) de réglage entre le régime (n_{Soll}) de consigne donné à l'avance de la turbine et le régime (n_{Ist}) réel détecté de la turbine et, d'autre part, au choix, soit le signal de différence associé à la différence (P_{Soll}-P_{Ist}) de réglage entre la puissance (P_{Soll}) de consigne donnée à l'avance de la turbine et la puissance (P_{Ist}) réelle détectée de la turbine ou le signal de différence associé à la différence (O_{Soll}-O_{Ist}) de réglage entre la section (O_{Soll}) transversale d'ouverture de consigne donnée à l'avance de la soupape d'admission de la turbine et la section (O_{Ist}) transversale d'ouverture réelle détectée de la soupape d'admission de la turbine puisse être envoyé au régleur (8) PI comme signal d'entrée ou comme signaux d'entrée.

2. Système (1) suivant la revendication 1,
dans lequel le dispositif (5) de réglage est conçu pour combiner un signal de différence associé par un signal de réglage produit par le régleur (8) PI, au choix, soit tout seul au signal de différence associé à la différence (n_{Soll}-n_{Ist}) de réglage entre le régime (n_{Soll}) de consigne donné à l'avance de la turbine et le régime (n_{Ist}) réel détecté de la turbine, soit, d'une part, au signal de différence associé à la différence (n_{Soll}-n_{Ist}) de réglage entre le régime (n_{Soll}) de consigne donné à l'avance de la turbine et le régime (n_{Ist}) réel détecté de la turbine et, d'autre part, au choix, soit à un signal de consigne de puissance associé à la puissance (P_{Soll}) de consigne donnée à l'avance de la turbine, soit à un signal de consigne d'ouverture associé à la section (O_{Soll}) transversale d'ouverture de consigne donnée à l'avance de la soupape d'admission de la turbine.

3. Système (1) suivant la revendication 1 ou 2,
dans lequel le dispositif (5) de réglage a au moins un régleur (10) P, par lequel peut être amplifié le signal de différence envoyé au régleur (8) PI et associé à la différence (n_{Soll}-n_{Ist}) de réglage entre le régime (n_{Soll}) de consigne donné à l'avance de la turbine et le régime (n_{Ist}) réel détecté de la turbine.

4. Système (1) suivant la revendication 2 ou 3,
dans lequel le dispositif (5) de réglage a au moins deux autres régleurs (11, 12) P,
dans lequel, par l'un des deux régleurs (11) P, le signal de différence, qui peut être envoyé au signal de réglage et qui est associé à la différence (n_{Soll}-n_{Ist}) de réglage entre le régime (n_{Soll}) de consigne donné à l'avance de la turbine et le régime (n_{Ist}) réel détecté de la turbine, peut être amplifié et
dans lequel, par l'autre des deux régleurs (12) P, le signal de consigne de puissance ou le signal de consigne d'ouverture, qui peut être envoyé au signal de réglage et qui est associé à la puissance (P_{Soll}) de consigne de la turbine ou à la section (O_{Soll}) transversale d'ouverture de consigne de la soupape d'admission de la turbine, peut être amplifié.

5. Système (1) suivant l'une des revendications 1 à 4, comportant au moins un dispositif (7) de sélection, qui peut être relié, en technique du signal, au dispositif (5) de réglage, et par lequel il peut être sélectionné le signal de différence ou les signaux de différence, qui peut être envoyé comme signal d'entrée ou qui peuvent être envoyés comme signaux d'entrée.

6. Procédé de réglage d'une section transversale d'ouverture d'au moins une soupape d'admission de turbine,
par laquelle il peut être envoyé un fluide de travail à une turbine, notamment à une turbine à vapeur,
dans lequel on détecte un régime (n_{Ist}) réel de la turbine, une puissance (P_{Ist}) réelle de la turbine et une section (O_{Ist}) transversale d'ouverture réelle de la soupape d'admission de la turbine,
dans lequel on détermine une différence (n_{Soll}-n_{Ist}) de réglage entre un régime (n_{Soll}) de consigne donné à l'avance de la turbine et le régime (n_{Ist}) réel détecté de la turbine et une différence ( P_{Soll}-P_{Ist}) de réglage entre une puissance (P_{Soll}) de consigne donnée à l'avance de la turbine et la puissance (P_{Ist}) réelle détectée de la turbine et on produit des signaux de différence associés aux diverses différences (n_{Soll}-n_{Ist}; P_{Soll}-P_{Ist}) de réglage,
**caractérisé en ce que**
on produit une différence (O_{Soll}-O_{Ist}) de réglage entre une section (O_{Soll}) transversale d'ouverture de consigne donnée à l'avance de la soupape d'admission de la turbine et la section (O_{Ist}) transversale d'ouverture réelle détectée de la soupape d'admission de la turbine et un signal de différence associé à cette différence (O_{Soll}-O_{Ist}) de réglage et **en ce que**
on envoie, comme signal d'entrée soit comme signaux d'entrée, au choix, soit tout seul le signal de différence associé à la différence (n_{Soll}-n_{Ist}) de réglage entre le régime (n_{Soll}) de consigne donné à l'avance de la turbine et le régime (n_{Ist}) réel détecté de la turbine, soit, d'une part, le signal de différence associé à la différence (n_{Soll}-n_{Ist}) de réglage entre le régime (n_{Soll}) de consigne donné à l'avance de la turbine et le régime (n_{Ist}) réel détecté de la turbine et, d'autre part, au choix, soit le signal de différence associé à la différence (P_{Soll}-P_{Ist}) de réglage entre la puissance (P_{Soll}) de consigne donnée à l'avance de la turbine et la puissance (P_{Ist}) réelle détectée de la turbine, soit le signal de différence associé à la différence (O_{Soll}-Oᵢₛₜ) de réglage entre la section (O_{Soll}) transversale d'ouverture de consigne donnée à l'avance de la soupape d'admission de la turbine et la section (O_{Ist}) transversale d'ouverture réelle détectée de la soupape d'admission de la turbine à un régleur (8) PI conçu pour régler la section transversale d'ouverture de la soupape d'admission de la turbine.

7. Procédé suivant la revendication 6,
dans lequel on combine un signal de réglage produit par le régleur (8) PI, au choix, soit tout seul au signal de différence associé à la différence (n_{Soll}-n_{Ist}) de réglage entre le régime (n_{Soll}) de consigne donné à l'avance de la turbine et le régime (n_{Ist}) réel détecté de la turbine ou, d'une part, au signal de différence associé à la différence (n_{Soll}-n_{Ist}) de réglage entre le régime (n_{Soll}) de consigne donné à l'avance de la turbine et le régime (n_{Ist}) réel détecté de la turbine et, d'autre part, au choix, soit un signal de consigne de puissance associé à la puissance (P_{Soll}) de consigne donnée à l'avance, soit à un signal de consigne d'ouverture associé à la section (Oₛₒₗₗ) transversale d'ouverture de consigne donnée à l'avance de la soupape d'admission de la turbine.

8. Procédé suivant la revendication 6 ou 7,
dans lequel on amplifie, au moyen d'un régleur (10) P, le signal de différence, qui peut être envoyé au régleur (8) PI et qui est associé à la différence (n_{Soll}-n_{Ist}) de réglage entre le régime (n_{Soll}) de consigne donné à l'avance de la turbine et le régime (n_{Ist}) réel détecté de la turbine.

9. Procédé suivant la revendication 7 ou 8,
dans lequel on amplifie, au moyen d'un autre régleur (11) P, le signal de différence, qui peut être envoyé au signal de réglage et qui est associé à la différence (n_{Soll}-n_{Ist}) de réglage entre le régime (n_{Soll}) de consigne donné à l'avance de la turbine et le régime (n_{Ist}) réel détecté de la turbine et
dans lequel on amplifie, au moyen d'un autre régleur (12) P, le signal de consigne de puissance ou le signal de consigne d'ouverture pouvant être envoyé au signal de réglage et associé à la puissance (P_{Soll}) de consigne de la turbine ou à la section (Oₛₒₗₗ) transversale d'ouverture de consigne de la soupape d'admission de la turbine.
